# EUROPÄISCHE PATENTSCHRIFT

(11) **EP 0 913 248 B1**
(45) Veröffentlichungstag und Bekanntmachung des Hinweises auf die Patenterteilung: **02.01.2003**
(21) Anmeldenummer: 98118341.1
(22) Anmeldetag: 28.09.1998
(51) Int. Cl.: B29C 65/18, B29C 65/78, B29C 65/10, B29C 65/20

(54) **Schweissvorrichtung zum überlappenden Verschweissen von Folienrändern**
Welding device for overlapping welding of sheet borders
Dispositif de soudage pour souder des bords de feuilles par recouvrement

(30) Priorität: 03.11.1997 DE 29719436 U
(43) Veröffentlichungstag der Anmeldung: 06.05.1999
(73) Patentinhaber: WEGENER GmbH, D-52074 Aachen (DE)
(72) Erfinder: Gehde, Michael, Dr., 52076 Aachen (DE)
(74) Vertreter: Paul, Dieter-Alfred, Dipl.-Ing.

(56) Entgegenhaltungen:
- EP-A- 0 009 015
- DE-U- 29 620 216
- US-A- 4 655 872

## Beschreibung

Die Erfindung betrifft eine Schweißvorrichtung zum überlappenden Verschweißen von Folienrändern, mit Anpreßrollen zum Zusammenpressen der Folienränder nach deren Erhitzung, die auf Achsen sitzen, von denen wenigstens eine über eine Verstelleinrichtung in Richtung auf die andere Achse und umgekehrt bewegbar ist.

Schweißvorrichtungen der vorgeschriebenen Art werden insbesondere zur Verschweißung von Folien im Deponiebau verwendet. Die Folien dienen der Abdichtung der Deponiesohle. Dabei werden hohe Anforderungen an die Qualität der Verschweißung gestellt.

Eine solche Schweißvorrichtung ist beispielsweise aus der DE 40 000 017 A1 und dem DE 296 20 216.9 bekannt. Sie weist eine Einlaufseite auf, über die überlappend ausgelegte Folienränder beim Verfahren der Schweißvorrichtung übereinander einlaufen und über einen keilförmigen Heizkörper geführt werden. Dieser Heizkörper ist liegend angeordnet, d. h. die beiden Keilflächen, die gleichzeitig auch die Heizflächen bilden, liegen übereinander. Der Heizkörper ist mit seinem stumpfen Ende zur Einlaufseite hin gerichtet. Der oben liegende Folienrand wird dabei über die obere Heizfläche und der unten liegende Folienrand über die untere Heizfläche geführt. Beide Heizflächen vereinigen sich zur Auslaufseite hin in einer linienförmigen Keilspitze.

Unmittelbar hinter dem Heizkörper befinden sich übereinanderliegend Anpreßrollen, welche auf sich horizontal und quer zur vorgesehenen Durchlaufrichtung der Folienränder erstreckenden Achsen sitzen. Zwischen den Anpreßrollen werden die erhitzten und an den gegenüberliegenden Seiten plastifizierten Folienränder hindurchgeführt und dabei derart aneinandergedrückt, daß die plastifizierten Flächen miteinander verschmelzen und nach dem Erkalten eine Schweißverbindung entsteht.

Die Anpreßrollen können auf den Achsen frei drehbar gelagert sein oder sich mit den Achsen drehen. Im letzeren Fall besteht die Möglichkeit, eine der Achsen oder auch beide Achsen mit den darauf befindlichen Anpreßrollen motorisch anzutreiben. In diesem Fall dienen die Anpreßrollen auch als Vortriebsrollen, d. h. sie ziehen die Folienränder in die Schweißvorrichtung hinein und - da die Folienränder gewöhnlich ortsfest ausgelegt, also unbeweglich sind - sorgen so für den Vortrieb der Schweißvorrichtung.

Bei den bekannten Schweißvorrichtungen ist gewöhnlich eine der Achsen gerätefest gelagert und die andere Achse relativ zu der einen Achse beweglich geführt. Hierzu ist die bewegliche Achse bei der gattungsgemäßen Schweißvorrichtung nach der EP-A-0 009 015 um ein Scharnier drehbar gelagert und mit einer Verstelleinrichtung verbunden, über die der Abstand zwischen den beiden Achsen variierbar ist. Des weiteren können die Achsen mit den Anpreßrollen in der zu den Bahnen parallelen Ebene nicht parallel ausgerichtet werden, indem sie um einen kleinen Winkel von ca. 1 bis 3° verschränkt werden. Hierdurch soll das Zusammenführen der Folienränder unterstützt werden.

Obwohl der zwischen den Anpreßrollen wirkende Anpreßdruck eingestellt werden kann, war die Schweißqualität mitunter nicht befriedigend. Insbesondere dann, wenn zwei nebeneinanderliegende Schweißnähte zwecks Bildung eines Prüfkanals zwischen diesen vorgesehen wurden, stellten sich Qualitätsprobleme ein, d. h. die Schweißnaht erwies sich als nicht ausreichend dicht.

Der Erfindung liegt die Aufgabe zugrunde, eine Schweißvorrichtung der eingangs genannten Art so auszubilden, daß Schweißnähte mit höherer Zuverlässigkeit und Qualität hergestellt werden können.

Diese Aufgabe wird erfindungsgemäß dadurch gelöst, daß eine der Achsen an zwei Schwenkarmen gehalten ist, die im Bereich ihrer Lagerung nicht miteinander verbunden sind, und daß eine Justiereinrichtung vorgesehen ist, über die die Stellung der Schwenkhebel relativ zueinander derart justierbar ist, daß die von den Schwenkhebeln gehaltene Achse parallel zu der anderen Achse ausrichtbar und in dieser Stellung fixierbar ist.

Diesem Gedanken liegt die schon zur Erfindung gehörende Erkenntnis zugrunde, daß die Stellung der die Anpreßrollen tragenden Achsen einen wesentlichen Einfluß auf die Qualität der Schweißnaht bzw. Schweiznähte hat. Schon geringe Abweichungen von der Parallelität der Achsen führt dazu, daß die an sich vorgesehene Breite der Schweißnaht und damit deren Festigkeit nicht erreicht wird. Bei der Erzeugung zweier im Abstand nebeneinanderliegender Schweißnähte kann eine Nichtparallelität der Achsen die unvollkommene Ausbildung einer der beiden Schweißnähte zur Folge haben. Mit Hilfe der erfindungsgemäßen Justiereinrichtung besteht die Möglichkeit, die beiden Achsen genau parallel zueinander einzustellen. Dies kann zweckmäßigerweise so erfolgen, daß die Anpreßrollen mit Hilfe der Betätigungsreinrichtung aufeinandergepreßt und dann die eine Achse mit Hilfe der Justiereinrichtung solange verstellt wird, bis die Anpreßrollen über ihre volle Breite Linienberührung haben. Dies kann beispielsweise mit Hilfe eines zwischen den Anpreßrollen hindurchgeführten Papiers kontrolliert werden.

Es hat sich gezeigt, daß die Justierung der Achsen mit dem Ziel, sie genau parallel zueinander zu stellen, einwandfreie und reproduzierbare Schweißnähte zum Ergebnis hat. Damit konnte ein Grund für Qualitätsprobleme an den Schweißnähten ausgeschaltet werden.

In Ausbildung der Erfindung ist vorgesehen, daß die Justiereinrichtung die beiden Schwenkarme miteinander verbindet und auf diese Weise ihre Bewegung derart synchronisiert, daß die zwischen ihnen sich erstreckende Achse genau parallel zu der gerätefest gelagerten Achse verläuft. In diesem Fall ist die Justiereinrichtung zweckmäßigerweise als Brücke zwischen den Schwenkarmen ausgebildet, welche wenigstens an einem der Schwenkarme lösbar befestigt ist, wobei die Befestigung verstellbar ist. Dabei kann die Befestigung beispielsweise als Schraubenbefestigung ausgebildet sein. Nach Lösen der Schrauben können die Schwenkarme so zueinander gestellt werden, daß die von ihnen gehaltene Achse parallel zu der anderen Achse zu liegen kommt. Anschließend können die Schrauben wieder angezogen und damit die gefundene Stellung fixiert werden. Die Schwenkarme sind dann so miteinander verbunden, daß die von ihnen geführte Achse parallel zu der anderen verläuft.

In der Zeichnung ist die Erfindung anhand eines Ausführungsbeispiels näher veranschaulicht. Es zeigen:
- Fig. 1: die eine Seitenansicht einer erfindungsgemäßen Schweißvorrichtung;
- Fig. 2: die andere Seitenansicht der Schweißvorrichtung gemäß Fig. 1;
- Fig. 3: eine Ausschnittvergrößerung des in Fig. 2 mit "X" bezeichneten Kreisausschnittes mit Schnittdarstellung in der Ebene A-A;
- Fig. 4: eine teilweise Rückansicht der Schweißvorrichtung gemäß den Figuren 1 bis 3 vor der Justierung und
- Fig. 5: die Darstellung gemäß Fig. 3 nach der Justierung.

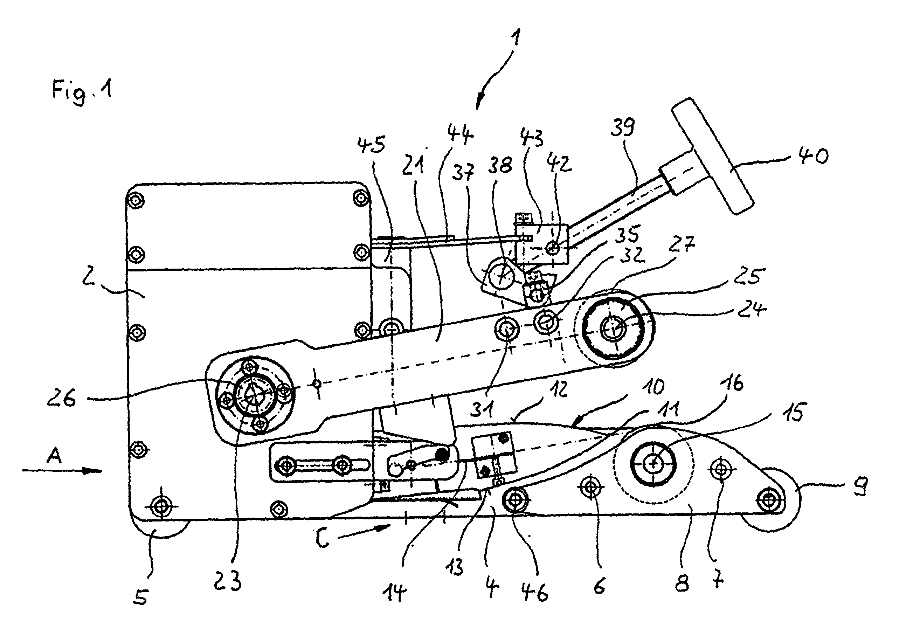

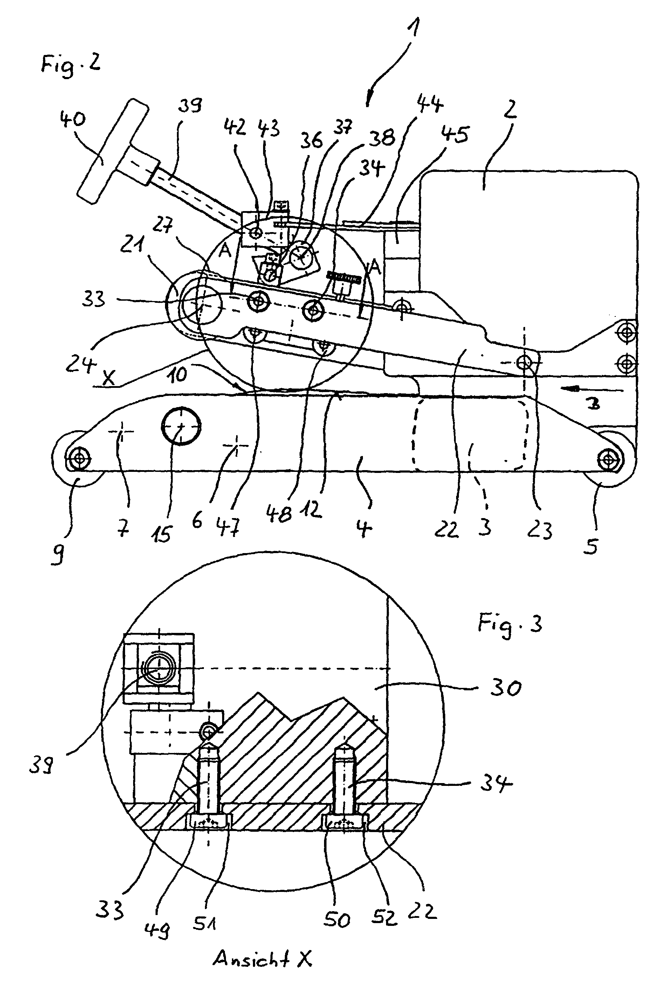

Die in den Figuren dargestellte Schweißvorrichtung 1 weist ein Gehäuse 2 auf, an dem ein hier nicht näher dargestellter Antriebsmotor quergerichtet, d. h. senkrecht zur Zeichnungsebene der Figuren 1 und 2, angeflanscht ist. Das Gehäuse 2 erstreckt sich von der Eingangsseite her gesehen nur über einen Teil der rechten Seite (in Fig. 1 vorn liegend). Im unteren Bereich ist ein Querträger 3 an dem Gehäuse 2 befestigt, der sich horizontal erstreckt und an dessen von der Eingangsseite (Pfeil A) gesehen linken Seite ein Längsträger 4 befestigt ist, der in Fig. 2 vorn liegt.

An der Eingangsseite ist eine Fahrwalze 5 einerends an dem Gehäuse 2 und anderenends an dem Längsträger 4 gelagert. Sie erstreckt sich über fast die gesamte Breite der Schweißvorrichtung 1. Im Bereich des Ausgangs der Schweißvorrichtung 1 erstrecken sich von der Innenseite des Längsträgers 4 zwei Haltebolzen 6, 7 über nahezu die gesamte Breite der Schweißvorrichtung 1. An deren von der Eingangsseite (Pfeil A) gesehen rechten Seite ist an ihnen ein Halteblech 8 befestigt, das in Fig. 1 vorn liegt und sich im wesentlichen vertikal erstreckt. Ausgangsseitig erstreckt sich zwischen Längsträger 4 und Halteblech 8 eine zweite Fahrwalze 7. Sie ist an dem Längsträger 4 und dem Halteblech 8 frei drehbar gelagert. Beide Fahrwalzen 5, 9 sorgen für die Verfahrbarkeit der Schweißvorrichtung 1 auf einem Boden.

Etwa in der Mitte der Schweißvorrichtung 1 befindet sich ein keilförmiger Heizkörper 10, dessen Keilspitze 11 ausgangsseitig liegt. Der Heizkörper 10 hat eine obere Heizfläche 12 und eine untere Heizfläche 13. Er ist beidseitig an Blattfederarmen (nur in Fig. 1 zu sehen) 14 aufgehängt. Die nicht sichtbaren Enden der Blattfederarme 14 sind an einem Schlitten befestigt, der in dem Querträger 3 horizontal verschieblich ist. Auf diese Weise kann der Heizkörper 10 in und gegen die Fahrtrichtung der Schweißrichtung 1 verschoben werden.

Zwischen Längsträger 4 und Halteblech 8 erstreckt sich ferner eine Drehachse 15 quer über die Breite der Schweißvorrichtung 1. Auf der Drehachse 15 ist eine Anpreßrolle 16 befestigt, welche zwei beabstandete und profilierte Rollenabschnitte 17, 18 aufweist. Die Drehachse 15 durchsetzt den Längsträger 4 und ein dortiges Lager 19 und weist außenseitig ein Kettenrad 20 auf, über das eine Kette (nicht dargestellt) läuft. Die Kette wird von einem Ausgang des Antriebsmotors und von einem weiteren Ritzel angetrieben, was hier der Übersichtlichkeit halber weggelassen ist.

An der Außenseite des Gehäuses 2 ist ein zur Ausgangsseite hin schräg nach oben gehender Schwenkarm 21 gelagert. Parallel dazu und in gleicher Weise ausgerichtet ist auf der anderen Seite des Gehäuses 2 ein zweiter Schwenkarm 22 gelagert, und zwar um dieselbe Querachse 23. Die Schwenkarme 21, 22 stehen im Bereich ihrer Lagerungen nicht miteinander in Verbindung.

Ihre freien Enden sind über eine Drehachse 24 miteinander verbunden. Sie ist an dem von der Eingangsseite her gesehen linken Schwenkarm 22 frei drehbar gelagert und durchfaßt den rechten Schwenkarm 21. An der Außenseite des Schwenkarms 21 sitzt auf der Drehachse 24 ein Kettenrad 25. Es korrespondiert mit einem Ritzel 26, welches koaxial zu der Querachse 23 auf einer Antriebswelle des Getriebes sitzt. Zwischen Kettenrad 25 und Ritzel 26 ist eine hier nicht dargestellte Kette gespannt. Beide Drehachsen 15, 23 sind also antreibbar, und zwar in entgegengesetzter Richtung.

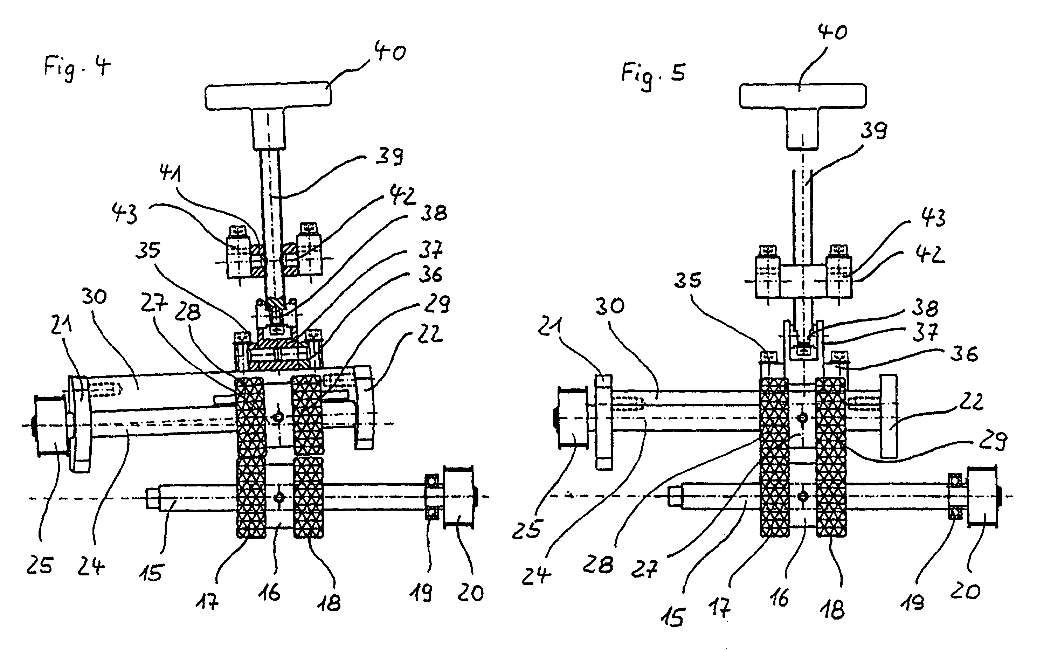

Auch auf der Querachse 23 sitzt eine Anpreßrolle 27, welche in gleicher Weise wie die Anpreßrolle 16 zwei profilierte Rollenabschnitte 28, 29 aufweist (Figuren 4 und 5). Die Anpreßrollen 16, 27 sind so einander zugeordnet, daß die linksseitigen Rollenabschnitte 17, 28 und die rechtsseitigen Rollenabschnitte 18, 29 aufeinander zu liegen kommen, wenn die Schwenkarme 21, 22 nach unten bewegt werden. Die gegenseitige Anlage ist aus den Figuren 4 und 5 zu ersehen.

In dem Raum zwischen dem Gehäuse 2 und der Drehachse 24 wird der Abstand der Schwenkarme 21, 22 durch ein Brückenstück 30 überbrückt. Das Brückenstück 30 ist an dem von der Eingangsseite her gesehen rechten Schwenkarm 21 über zwei nebeneinanderliegende Befestigungsschrauben 31, 32 und an dem linksseitigen Schwenkarm 22 über ebenfalls zwei nebeneinanderliegende Justierschrauben 33, 34 befestigt. Das Brückenstück 30 verbindet somit die Schwenkarme 21, 22.

Auf dem Brückenstück 30 sind im Abstand zueinander zwei Lagerböcke 35, 36 aufgeschraubt, in denen ein Schwenkelement 37 gelagert ist. Das Schwenkelement 37 hat an seinem freien Ende ein Gelenk 38, über das es mit einer Spindel 39 verbunden ist, welche endseitig ein Handrad 40 trägt. Die Spindel 39 sitzt in einer Spindelmutter 41, die um eine horizontale Achse 42 in einem Kupplungsstück 43 gelagert ist. Das Kupplungsstück 43 ist am freien Ende einer Blattfeder 44 angeschraubt, welche mit dem anderen Ende an einem Fortsatz 45 des Gehäuses 2 eingespannt ist.

Mit Hilfe des vorbeschriebenen Mechanismusses können das Brückenstück 30 und damit die Schwenkarme 21, 22 aus der in den Figuren 1 und 2 gezeigten Offenstellung in die in den Figuren 4 und 5 dargestellte Kontaktstellung verschwenkt werden. Dies geschieht durch Verschwenkung der Spindel 39 in Fig. 1 gegen den Uhrzeigersinn, bis das Schwenkelement 37 eine Übertotpunktstellung eingenommen hat. Dabei kann die Kontaktstellung durch Verdrehen der Spindel 39 entsprechend den jeweiligen Anforderungen eingestellt werden.

Im Betrieb wird die Schweißvorrichtung 1 entgegen der durch den Pfeil A angegebenen Richtung längs der überlappend ausgelegten Folienränder bewegt, welche hier nicht dargestellt sind. Dabei tritt der obenseitige Folienrand - wie durch Pfeil B angegeben - eingangsseitig in einen Spalt zwischen Gehäuse 2 und Querträger 3 bzw. Längsträger 4 ein und wird dann über die obere Heizfläche 12 des Heizkörpers 10 geleitet. Gleichzeitig tritt der untere Folienrand - in Richtung auf die Eingangsseite (Pfeil A) rechte Folienrand - von unten in Richtung des Pfeils C in die Schweißvorrichtung ein und wird durch eine Andrückrolle 46 über die untere Heizfläche 13 des Heizkörpers 10 geführt. Der obere Folienrand wird zusätzlich über zwei Andrückrollen 47, 48 an die obere Heizfläche 12 gedrückt, welche wippenartig an dem Brückenstück 30 gelagert sind.

Die oberen und unteren Heizflächen 12, 13 sind in Querrichtung wie die Anpreßrollen 16, 27 aufgeteilt, d. h. sie haben jeweils zwei in Längsrichtung verlaufende Heizflächenabschnitte, die gleich breit und gleich beabstandet sind wie die Rollenabschnitte 17, 18 bzw. 28, 29 und in deren Verlängerung liegen. Auf diese Weise erhalten die Folienränder auf den einander zugewandten Seite je zwei nebeneinanderliegende, beabstandete und parallel verlaufende, hitzeplastifizierte Streifen. Durch die Anpreßrollen 16, 27 werden diese Streifen aufeinandergepreßt, selbstverständlich wenn die Anpreßrollen 16, 27 sich in Kontaktstellung befinden. Auf diese Weise werden die Folienränder durch zwei beabstandete Schweißnähte miteinander verbunden, wobei zwischen den Schweißnähten ein Prüfkanal gebildet wird. Durch Beaufschlagung mit Luftdruck kann festgestellt werden, ob die Schweißnähte an irgendeiner Stelle undicht sind.

Da die Anpreßrollen 16, 27 angetrieben sind, dienen diese nicht nur zur Druckausübung auf die Folienränder, sondern treiben die Schweißvorrichtung 1 auch an, und zwar in der Weise, daß die Schweißvorrichtung 1 an den Folienrändern sich selbst entlangzieht.

zur Erzielung einer hohen Qualität der Schweißnähte hat es sich als sehr wesentlich erwiesen, daß die beiden Drehachsen 15, 24 absolut parallel zueinander verlaufen. Eine solche Situation ist aus Fig. 5 zu ersehen. In diesem Fall werden die plastifizierten Streifen jeweils mit gleichem Druck beaufschlagt.

Fig. 5 zeigt die Idealsituation. Es kann jedoch vorkommen, daß sich die beiden Schwenkarme 21, 22 in der Weise verschwenken, daß der eine tiefer liegt als der andere. Eine solche Situation ist Fig. 4 zu entnehmen. Hier ist der Schwenkarm 21 etwas tiefer verschwenkt als der andere Schwenkarm 22. Dies hat zur Folge, daß die Drehachse 24 nicht genau parallel zu der Drehachse 15 steht, sondern etwas schräg steht. Dies wiederum führt dazu, daß nur die in dieser Ansicht linken Rollenabschnitte 17, 28 aneinander anliegen, und das noch nicht einmal mit Linienkontakt, sondern mit Punktberührung. Die rechten Rollenabschnitte 18, 29 haben Abstand zueinander. Es versteht sich, daß beim Durchführen der Folienränder die beiden plastifizierten Streifen mit unterschiedlichem Druck beaufschlagt werden mit der Folge, daß die plastifizierten Streifen, welche von den beiden rechten Rollenabschnitten 18, 29 beaufschlagt sind, nur ungenügend aufeinandergepreßt werden und demgemäß die dort entstehende Schweißnaht nicht hinreichend fest und dicht ist.

Die Parallelität der beiden Drehachsen 15, 24 läßt sich jedoch wie folgt wiederherstellen. Hierzu werden die Justierschrauben 33, 34 gelockert, über die das Brückenstück 30 mit dem Schwenkarm 22 verbunden ist. Wie der Ausschnittsvergrößerung gemäß Fig. 3 zu entnehmen ist, sitzen die Schraubenköpfe 49, 50 der Justierschrauben 33, 34 und die daran anschließenden, gewindetragenden Abschnitte in gestuften Löchern 51, 52, deren Lochinnenseiten Abstand zu den Schraubenköpfen 49, 50 bzw. den daran anschließenden Abschnitten der Justierschrauben 33, 34 haben. Die Schraubenköpfe 49, 50 sind also nach dem Lockern der Justierschrauben 33, 34 innerhalb der Löcher 51, 52 beweglich. Diese Beweglichkeit ermöglicht eine geringe Verschränkung beider Arme 21, 22 gegeneinander (Figur 4). Die geringfügige Winkelverschränkung, die in den Lagern der Achse 24 und der Arme 21, 22 in Punkt 23 auftritt, ist für die Funktion unproblematisch. Durch Druckausübung auf den Schwenkarm 22 von oben wird dieser dann so weit nach unten verschwenkt, bis auf die rechtsseitigen Rollenabschnitte 18, 29 mit Linienberührung aneinander anliegen, also die in Fig. 5 gezeigte Situation gegeben ist. Dann werden die Justierschrauben 33, 34 wieder angezogen, so daß die Stellung der Schwenkarme 21, 22 zueinander durch das Brückenstück 30 fixiert wird. Damit ist dann aber auch die Querachse 23 wieder parallel gestellt zu der Drehachse 15.

## Patentansprüche

1. Schweißvorrichtung (1) zum überlappenden Verschweißen von Folienrändern, mit Anpreßrollen (16, 27) zum zusammenpressen der Folienränder nach deren Erhitzung, die auf Achsen (15, 24) sitzen, von denen wenigstens eine über eine Verstelleinrichtung in Richtung auf die andere Achse (15) und umgekehrt bewegbar ist, **dadurch gekennzeichnet, daß** eine der Achsen (15, 24) an zwei Schwenkarmen (21, 22) gehalten ist, die im Bereich ihrer Lagerung nicht miteinander verbunden sind, und daß eine Justiereinrichtung (30, 33, 34) vorgesehen ist, über die die Stellung der Schwenkarme (21, 22) relativ zueinander derart justierbar ist, daß die von den Schwenkarmen (21, 22) gehaltene Achse (24) parallel zu der anderen Achse (15) ausrichtbar und in dieser Stellung fixierbar ist.

2. Schweißvorrichtung nach Anspruch 1, **dadurch gekennzeichnet, daß** die Justiereinrichtung (30, 33, 34) die beiden Schwenkarme (21, 22) verbindet.

3. Schweißvorrichtung nach Anspruch 2, **dadurch gekennzeichnet, daß** die Justiereinrichtung eine Brücke (30) zwischen den Schwenkarmen (21, 22) aufweist, welche wenigstens an einem der Schwenkarme (21, 22) lösbar befestigt ist, wobei die Befestigung verstellbar ist.

4. Schweißvorrichtung nach Anspruch 3, **dadurch gekennzeichnet, daß** die Befestigung als Schraubenbefestigung (33, 34) ausgebildet ist.

## Claims

1. Heat-sealing device (1) for overlapping heat-sealing film edges comprising pressure rollers (16, 27) for pressing the film edges together after their heating, the pressure rollers (16, 27) are disposed on axis (15, 24), at least one of which is movable in direction to the other axis (15) by an adjustment assembly and oppositely, **characterized in that** one of the axis (15, 24) is hold on two pivot arms (21, 22), which are not connected with each other in the region of their bearings, and that an adjustment device (30, 33, 34) is provided, whereby the position of the pivot arms (21, 22) is adjustable relative to each other so that the axis (24) hold by the pivot arms (21, 22) can be aligned parallel to the other axis and can be fixed in this position.

2. Heat-sealing device of claim 1, **characterized in that** the adjustment device (30, 33, 34) connects the two pivot arms (21, 22).

3. Hea-sealing device of claim 2, **characterized in that** the adjustment device comprises a bridge (30) between the pivot arms (21, 22), which is mounted at least on one of the pivot arms (21, 22) detachably, wherein the mounting is adjustable.

4. Heat-sealing device of claim 3, **characterized in that** the mounting is formed as a screw mounting (33, 34).

## Revendications

1. Dispositif de soudure (1) pour souder des bords de feuilles qui se chevauchent, comprenant des galets de pression (16, 27) pour comprimer les bords de feuilles après qu'ils ont été chauffés, qui sont montés sur des axes (15,24) dont au moins l'un est mobile en direction de l'autre axe (15) et inversement par l'intermédiaire d'un dispositif de déplacement, **caractérisé en ce que** l'un des axes (15, 24) est fixé à deux bras pivotants (21, 22) qui ne sont pas reliés entre eux au voisinage de leur palier, et **en ce qu'**un dispositif d'ajustage (30, 33, 34) est prévu, qui permet d'ajuster la position des bras pivotants (21, 22) l'un par rapport à l'autre, de manière à ce que l'axe (24) maintenu par les bras pivotants (21, 22) puisse être orienté parallèlement à l'autre axe (15) et immobilisé dans cette position.

2. Dispositif de soudure selon la revendication 1, **caractérisé en ce que** le dispositif d'ajustage (30, 33, 34) relie les deux bras pivotants (21, 22).

3. Dispositif de soudure selon la revendication 2, **caractérisé en ce que** le dispositif d'ajustage présente un pont (30) entre les bras pivotants (21, 22) qui est au moins fixé de manière amovible à l'un des bras pivotants (21, 22), la fixation étant réglable.

4. Dispositif de soudure selon la revendication 3, **caractérisé en ce que** la fixation est réalisée en tant que fixation par vis (33, 34).
